# EUROPEAN PATENT APPLICATION

(11) **EP 4 379 905 A1**
(43) Date of publication of application: **05.06.2024**
(21) Application number: 22848951.4
(22) Date of filing: 31.03.2022
(51) Int. Cl.: H01M 10/54

(54) **TREATMENT METHOD AND TREATMENT SYSTEM FOR WASTE LITHIUM ION BATTERY**

(30) Priority: 27.07.2021 CN 202110850110
(71) Applicant: KAWASAKI JUKOGYO KABUSHIKI KAISHA, Kobe-shi, Hyogo 650-8670 (JP); China Conch Venture Holdings Limited, Wuhu, Anhui, 241136 (CN); Anhui Conch Kawasaki Energy Conservation Equipment Manufacturing Company Limited, Wuhu, Anhui, 241136 (CN)
(72) Inventor: OSAWA, Hiroaki, Hyogo 650-8670 (JP); TAKADA, Shoji, Hyogo 650-8670 (JP); YAMASHITA, Mariko, Hyogo 650-8670 (JP); TSUZAWA, Masaki, Hyogo 650-8670 (JP); NAGAI, Ryosuke, Hyogo 650-8670 (JP); SUGATA, Masahiro, Hyogo 650-8670 (JP); ANDO, Fuminori, Hyogo 650-8670 (JP); LI, Daming, Anhui 241136 (CN); ZHAO, Fengwa, Anhui 241136 (CN); LI, Yang, Anhui 241136 (CN); TANG, Wenfang, Anhui 241136 (CN); SONG, Mingjun, Anhui 241136 (CN); YANG, Hongfeng, Anhui 241136 (CN)
(74) Representative: Leinweber & Zimmermann
(86) International application number: PCT/JP2022/016749
(87) International publication number: WO 2023/007868

(57) **Abstract**

A waste lithium-ion battery processing method is a method of processing a waste lithium-ion battery whose cathode active material contains phosphorus to recover lithium from the waste lithium-ion battery. The method includes: a thermal decomposition step of roasting the waste lithium-ion battery to thermally decompose the waste lithium-ion battery to produce a roasted product that contains the cathode active material; and a recovery step of immersing the produced roasted product in water to elute the lithium from the roasted product into the water, and then recovering the lithium. The thermal decomposition step includes: a roasting step of roasting the waste lithium-ion battery at a predetermined first temperature; and a mixing step of, before the roasting step, mixing a non-lithium alkali metal salt into the cathode active material of the waste lithium-ion battery.

## Description

### Technical Field

The present disclosure relates to a method of and a system for processing waste lithium-ion batteries.

### Background Art

Lithium-ion batteries (LIB) are widely used in electric automobiles, mobile phones, laptop computers, etc. A lithium-ion battery includes a cathode active material, an anode active material, an electrolyte solution, a separator, current collectors, and so forth. Lithium-ion batteries are categorized into multiple types including: an NCM battery whose cathode active material contains nickel, cobalt, manganese, and lithium; and an LFP battery whose cathode active material contains iron, phosphorus, and lithium.

Lithium contained in these lithium-ion batteries is a rare metal. Therefore, there is a desire to recover lithium from lithium-ion batteries that have been used and discarded (i.e., waste lithium batteries).

### Citation List

### Patent Literature

PTL 1: Japanese Laid-Open Patent Application Publication No. 2016-191143
PTL 2: Japanese Laid-Open Patent Application Publication No. 2012-229481

### Summary of Invention

### Technical Problem

In order to recover lithium from a waste lithium-ion battery, it is conceivable to take the following steps: subjecting the waste lithium-ion battery to roasting or the like to thermally decompose the waste lithium-ion battery, thereby obtaining the cathode active material from the waste lithium-ion battery; immersing the obtained cathode active material in water to elute lithium from the cathode active material into the water; and then recovering the lithium.

However, it has been found that, regarding the LFP battery, eluting lithium therefrom by immersion into water is difficult. In Patent Literature 1 mentioned above, a lithium-ion battery is roasted to obtain a powdery and granular material, to which an aqueous solution of alkali metal salt is added, which is then fed into a pressure vessel and mixed therein; thereafter, the mixture is subjected to hydrothermal treatment to be heated, and thereby lithium is extracted. The hydrothermal treatment is performed by heating the mixture in the pressure vessel in a hermetically sealed state. Therefore, there are problems, for example, it is difficult to achieve high treatment capacity, i.e., difficult to achieve high throughput per unit time; the complexity of the treatment facility is high; and operation management is difficult.

Patent Literature 2 discloses that, at oxidizing roasting, an alkaline earth metal hydroxide is added so as to turn fluorine and phosphorus into solid compounds. However, alkaline earth metals are less reactive than alkali metals. Accordingly, there is a possibility that lithium, which is an alkali metal, bonds to phosphate ions, resulting in the formation of water-insoluble lithium phosphate (Li₃PO₄). Moreover, in a case where a phosphorus-containing cathode active material is used in the waste lithium battery, there is a concern that the addition of the alkaline earth metal may not cause the decomposition by the roasting of the cathode active material to progress, and consequently, in such a case, it becomes difficult to elute lithium into water.

The present disclosure has been made to solve the above-described problems, and an object of the present disclosure is to provide a method of and a system for processing a waste lithium-ion battery, the method and the system making it possible to recover lithium from a waste lithium-ion battery whose cathode active material contains phosphorus by eluting the lithium into water without complex process steps, and to increase the purity of the recovered lithium.

### Solution to Problem

In order to achieve the above object, a waste lithium-ion battery processing method according to one aspect of the present disclosure is a method of processing a waste lithium-ion battery whose cathode active material contains phosphorus to recover lithium from the waste lithium-ion battery, the method including: a thermal decomposition step of roasting the waste lithium-ion battery to thermally decompose the waste lithium-ion battery to produce a roasted product that contains the cathode active material; and a recovery step of immersing the produced roasted product in water to elute the lithium from the roasted product into the water, and then recovering the lithium. The thermal decomposition step includes: a roasting step of roasting the waste lithium-ion battery at a predetermined first temperature; and a mixing step of, before the roasting step, mixing a non-lithium alkali metal salt into the cathode active material of the waste lithium-ion battery.

A waste lithium-ion battery processing system according to another aspect of the present disclosure is a system for processing a waste lithium-ion battery whose cathode active material contains phosphorus to recover lithium from the waste lithium-ion battery, the system including: a thermal decomposer that roasts the waste lithium-ion battery to thermally decompose the waste lithium-ion battery to produce a roasted product that contains the cathode active material; and a recovery system that immerses the produced roasted product in water to elute the lithium from the roasted product into the water, and then recovers the lithium. The thermal decomposer includes: a roaster that roasts the waste lithium-ion battery at a predetermined first temperature; and a mixer that, before roasting the waste lithium-ion battery by the roaster, mixes a non-lithium alkali metal salt into the cathode active material of the waste lithium-ion battery.

According to the above method or system, before roasting the waste lithium-ion battery, the cathode active material of the waste lithium-ion battery is mixed with the non-lithium alkali metal salt. Consequently, by roasting the cathode active material, the thermally stable cathode active material, which contains phosphorus, is decomposed, and phosphate ions and alkali metal ions can be caused to bond together before water-insoluble lithium phosphate (Li₃PO₄) is generated as a result of phosphate ions and lithium contained in the cathode active material bonding together during the elution. This makes it possible to prevent the lithium from becoming insoluble. Therefore, from the waste lithium-ion battery, whose cathode active material contains phosphorus, lithium can be eluted into water and the eluted lithium can be recovered without complex process steps.

### Advantageous Effects of Invention

The present disclosure provides advantageous effects of making it possible to recover lithium from a waste lithium-ion battery whose cathode active material contains phosphorus by eluting the lithium into water without complex process steps, and to increase the purity of the recovered lithium.

The above object, other objects, features, and advantages of the present disclosure will be made clear by the following detailed description of a preferred embodiment with reference to the accompanying drawings.

### Brief Description of Drawings

FIG. 1 is a schematic process drawing showing process steps performed by a waste lithium-ion battery processing system according to one embodiment of the present disclosure.
FIG. 2 shows a schematic configuration of a thermal decomposer that performs a thermal decomposition step shown in FIG. 1.
FIG. 3 shows a schematic configuration of a recovery system that performs a recovery step shown in FIG. 1.

### Description of Embodiments

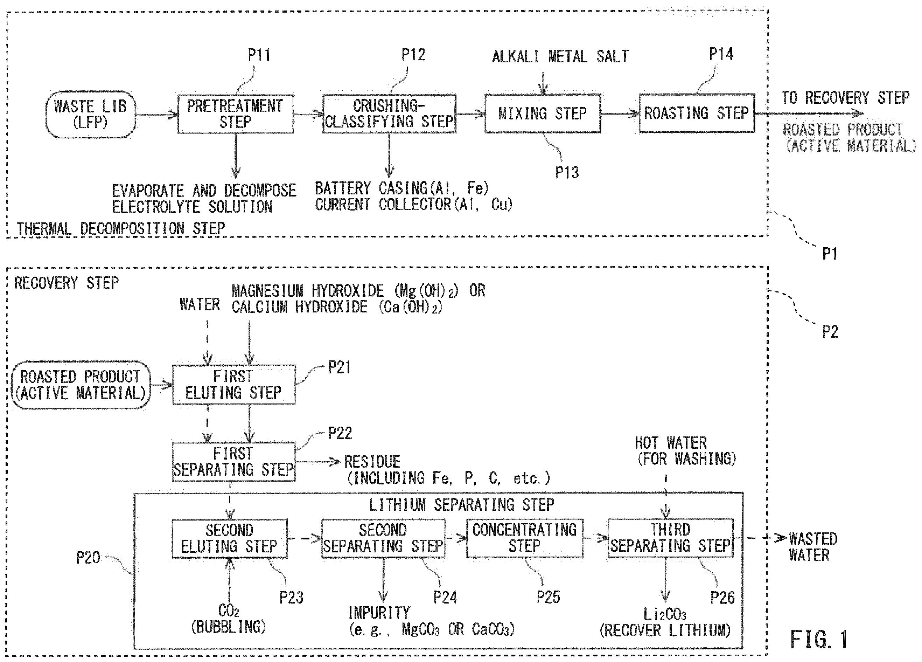

Hereinafter, a preferred embodiment of the present disclosure is described with reference to the drawings. FIG. 1 is a schematic process drawing showing process steps performed by a waste lithium-ion battery processing system according to one embodiment of the present disclosure.

A waste lithium-ion battery (waste LIB) to be processed by the processing system of the present embodiment is a LFP lithium-ion battery whose cathode active material contains phosphorus. More specifically, a LFP battery is a battery including: lithium iron phosphate (LiFePO₄) as a cathode active material; graphite as an anode active material; aluminum foil as a cathode current collector; and copper foil as an anode current collector.

The processing system is intended for processing a large-sized waste LIB, i.e., intended for processing a battery module in which multiple battery cells of waste lithium-ion batteries are combined and also for processing a battery unit in which such battery modules are combined. The battery unit is configured, for example, by accommodating electrically connected battery modules, a controller, and a cooler in a casing. For example, it is assumed that the processing system removes a waste LIB from an electric vehicle or a hybrid automobile, and processes the removed waste LIB, i.e., a battery unit or a battery module, as it is without disassembling it.

As shown in FIG. 1, the processing system of the present embodiment performs process steps including: a thermal decomposition step P1 of thermally decomposing the waste LIB to obtain an active material and roasting a powdery material including the obtained active material; and a recovery step P2 of immersing the roasted active material in water to elute lithium from the roasted active material into the water and then recovering the lithium.

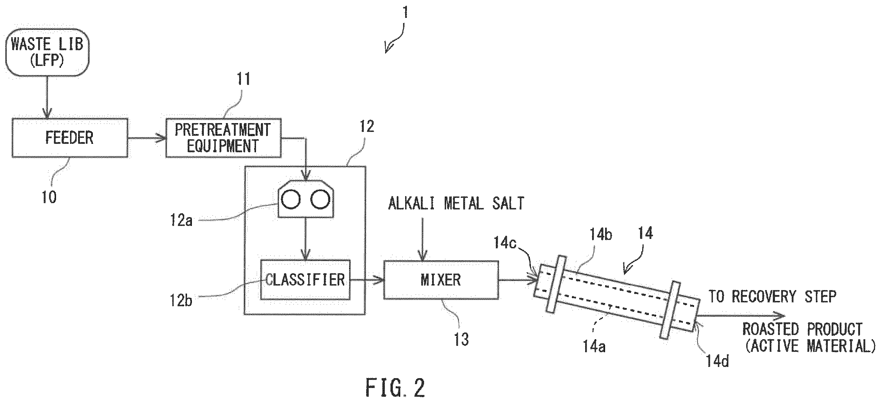

First, the thermal decomposition step P1 is described. The thermal decomposition step P1 includes a pretreatment step P11, a crushing-classifying step P12, a mixing step P13, and a roasting step P14. FIG. 2 shows a schematic configuration of a thermal decomposer that performs the thermal decomposition step shown in FIG. 1. A thermal decomposer 1 includes a feeder 10, pretreatment equipment 11, a crusher-classifier 12, a mixer 13, and a roaster 14.

In the pretreatment step P11, in order to decompose and remove the electrolyte solution from the waste LIB, the waste LIB is roasted at a second temperature, which is lower than a first temperature at which roasting is performed in the below-described roasting step P14, i.e., pre-roasted at the second temperature. Accordingly, the feeder 10 feeds the waste LIB to the pretreatment equipment 11. The feeder 10 is, for example, configured as a belt conveyer or the like. The pretreatment equipment 11 is, for example, configured as a grate preheater.

The second temperature in the pretreatment step P11 is set to such a temperature that the electrolyte solution can be decomposed and removed from the waste LIB. For example, the second temperature is higher than or equal to 150°C and lower than 400°C. Alternatively, the second temperature may be higher than or equal to 150°C and lower than or equal to 250°C.

In the crushing-classifying step P12, the waste LIB that has been treated in the pretreatment step P11 is crushed, and an active material is separated and sorted out from a current collector of the crushed waste LIB. Accordingly, the crusher-classifier 12 includes a crusher 12a and a classifier 12b. The crusher 12a is, for example, configured as a roll crusher. The crusher 12a crushes the large-sized waste LIB (battery unit or battery module) into pieces, each of which is roughly in the size of a battery cell or smaller.

The classifier 12b sorts and takes out the active material by separating the active material from the current collector of the waste LIB that has been crushed by the crusher 12a. The classifier 12b is, for example, configured as a sieve shaker or the like. In reality, the classifier 12b takes out not only the cathode active material, but also a small amount of impurities different from the cathode active material, such as the anode active material, and feeds them to the mixer 13. Except these taken-out materials and impurities, exterior materials, current collectors, etc., of the waste LIB are fed to different treatment equipment.

In the mixing step P13, an alkali metal salt is mixed into the active material of the waste LIB that has been sorted out in the crushing-classifying step P12, i.e., mixed into the cathode active material. The mixer 13 mixes the alkali metal salt into the active material and so forth that have been taken out by the classifier 12b. In the present embodiment, at least one alkali metal salt selected from the group consisting of sodium carbonate, potassium carbonate, rubidium carbonate, and cesium carbonate is mixed into the active material. The mixer 13 is, for example, configured as a roller mill, paddle mixer, grinding machine, or the like.

In the roasting step P14, the mixed waste LIB is roasted at the predetermined first temperature. The mixed waste LIB is a mixture containing the active material of the waste LIB and the alkali metal salt. The roaster 14 is, for example, configured as an external heat type rotary kiln. The external heat type rotary kiln includes a cylindrical body 14a and a heating jacket 14b. The cylindrical body 14a rotates about its center axis. The heating jacket 14b surrounds the outer periphery of the cylindrical body 14a.

One end of the cylindrical body 14a is a receiving inlet 14c, and the other end thereof is a discharging outlet 14d. The cylindrical body 14a is supported in such a manner that it is rotatable about its center axis in a state where the center axis is inclined with a predetermined angle, such that the cylindrical body 14a is sloped downward from the receiving inlet 14c toward the discharging outlet 14d. The waste LIB fed from the mixer 13 to the receiving inlet 14c of the cylindrical body 14a is transported toward the discharging outlet 14d by the rotation of the cylindrical body 14a.

The internal atmosphere of the cylindrical body 14a is the air atmosphere. Alternatively, the internal atmosphere of the cylindrical body 14a may be a reducing atmosphere, or may be a low-oxygen atmosphere having, for example, an oxygen concentration of 10% or lower. Heating gas is supplied to the heating jacket 14b surrounding the outer periphery of the cylindrical body 14a. As a result, the outer wall of the cylindrical body 14a is heated, and the waste LIB transported inside the cylindrical body 14a is heated. Then, the heated waste LIB is discharged through the discharging outlet 14d as a roasted product. The first temperature, which is the roasting temperature in the roasting step P14, is higher than or equal to 400°C, and may be, for example, 700°C.

Thus, the alkali metal salt is mixed into the cathode active material of the waste LIB, which contains lithium and phosphorus, and then the mixture is roasted. As a result, alkali metal ions and phosphate ions in the mixture bond together to form a phosphate. As mentioned above, the alkali metal salt includes at least one of sodium carbonate, potassium carbonate, rubidium carbonate, or cesium carbonate.

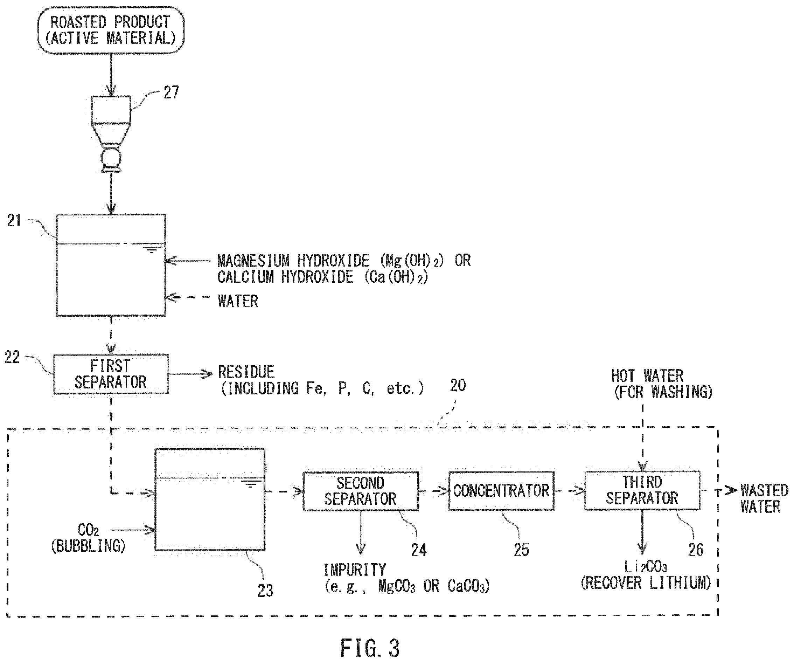

Next, the recovery step P2 is described. The recovery step P2 includes a first eluting step P21, a first separating step P22, and a lithium separating step P20. FIG. 3 shows a schematic configuration of a recovery system that performs the recovery step shown in FIG. 1. A recovery system 2 includes first elution equipment 21, a first separator 22, and a lithium separator 20.

In the first eluting step P21, the roasted product is immersed in water. Accordingly, the first elution equipment 21 is configured such that the roasted product is introduced into an immersion tank in which water is stored. The roasted product is fed, by each predetermined amount, to the immersion tank of the first elution equipment 21 via a hopper 27. As a result, the aqueous solution in the immersion tank turns into a mixture of the water and the roasted product. The first elution equipment 21 includes an agitator that agitates the aqueous solution in the immersion tank.

In the first eluting step P21, at the time of immersing the roasted product in the water, magnesium hydroxide (Mg(OH)₂) or calcium hydroxide (Ca(OH)₂) is added thereto. As a result of adding the magnesium hydroxide or calcium hydroxide to the aqueous solution in the immersion tank, iron, phosphorus, and fluorine components in the aqueous solution each form a water-insoluble compound.

In the first separating step P22, the aqueous solution that has been treated in the first eluting step P21 is subjected to solid-liquid separation. Accordingly, the first separator 22 is configured as a solid-liquid separator. By performing the solid-liquid separation by the first separator 22, the aforementioned iron, phosphorus, and fluorine components are removed from the aqueous solution as solid residues.

In the lithium separating step P20, lithium salts, such as Li₂O and Li₂CO₃, in the aqueous solution that has been separated in the first separating step are concentrated into slurry, and the slurry is subjected to solid-liquid separation. The lithium separating step P20 includes a second eluting step P23, a second separating step P24, a concentrating step P25, and a third separating step P26. The lithium separator 20 includes second elution equipment 23, a second separator 24, a concentrator 25, and a third separator 26 to perform the respective steps.

Similar to the first elution equipment 21, the second elution equipment 23 includes an immersion tank and an agitator. The aqueous solution that has gone through the solid-liquid separation by the first separator 22 is introduced into the second elution equipment 23. Further, carbon dioxide, i.e., CO₂, is introduced into the aqueous solution in the immersion tank of the second elution equipment 23. In the second eluting step P23, the aqueous solution stored in the immersion tank of the second elution equipment 23 is subjected to carbon dioxide bubbling.

As a result of the carbon dioxide bubbling, the pH of the aqueous solution is adjusted to weak alkaline. Consequently, an excess portion of the magnesium hydroxide or calcium hydroxide added in the first eluting step P21 is deposited as magnesium carbonate (MgCO₃) or calcium carbonate (CaCOs).

In the second separating step P24, the aqueous solution that has been treated in the second eluting step P23 is subjected to solid-liquid separation. By performing the solid-liquid separation by the second separator 24, solid impurities including the magnesium carbonate or calcium carbonate deposited from the aqueous solution in the second eluting step P23 are removed from the aqueous solution.

In the concentrating step P25, the aqueous solution that has gone through the solid-liquid separation in the second separating step P24 is concentrated. The concentrator 25 to perform the concentration is, for example, configured as an evaporative concentrator, crystallizer, or the like that heats the aqueous solution to about 80°C to evaporate the water from the aqueous solution. As a result of the aqueous solution being concentrated, the concentration of lithium contained in the aqueous solution increases, so that slurry containing lithium carbonate (Li₂CO₃) is produced.

In the third separating step P25, the slurry is subjected to solid-liquid separation. By performing the solid-liquid separation by the third separator 26, lithium carbonate is deposited from the slurry. In this manner, lithium is recovered in the form of lithium carbonate. The remaining aqueous solution is discarded. Alternatively, the remaining aqueous solution may be returned to the first elution equipment 21 or the second elution equipment 23.

As described above, according to the above method, before roasting the waste LIB, the cathode active material of the waste LIB, which contains phosphorus and lithium, is mixed with the non-lithium alkali metal salt. If the waste LIB is roasted without mixing the alkali metal salt into the cathode active material, then the cathode active material will not be decomposed, because the cathode active material containing phosphorus is thermally stable.

In this respect, before roasting the waste LIB, if the cathode active material of the waste LIB, which contains phosphorus and lithium, is mixed with the non-lithium alkali metal salt as in the present embodiment, then at the roasting of the cathode active material, phosphate ions and alkali metal ions can be caused to bond together before lithium phosphate is generated, which makes it possible to prevent the lithium from becoming insoluble. Therefore, from the waste LIB, whose cathode active material contains phosphorus and lithium, the lithium can be eluted into water and the eluted lithium can be recovered, without using acid solution or alkaline solution, or without requiring other complex process steps.

Further, the waste LIB is subjected to the pretreatment to decompose and remove the electrolyte solution from the waste LIB; the waste LIB that has gone through the pretreatment is crushed; the cathode active material is sorted out from the crushed waste LIB; and then the alkali metal salt is mixed into the cathode active material. In this manner, the cathode active material can be readily mixed with the alkali metal salt, and bonding between phosphorus contained in the cathode active material and the alkali metal can be readily facilitated.

Mixing the cathode active material with the alkali metal salt is performed as an independent step that is different from the pretreatment step P11, the crushing-classifying step P12, or the roasting step P14. This makes it possible to sufficiently mix the cathode active material with the alkali metal salt, and to effectively prevent bonding between lithium and phosphorus during the roasting.

Further, in the present embodiment, a carbonate is fed into the mixer 13 as the alkali metal salt. Carbonates are readily available, less dangerous than, for example, hydroxides, and easy to handle. Therefore, the mixing step P13 can be readily incorporated in the thermal decomposition step at low cost.

For example, the ratio of an alkali metal element content (A) in the alkali metal salt to a phosphorus element content (P) in the cathode active material (i.e., ratio A / P) is greater than or equal to 1.5 and less than or equal to 3.0. An experiment was conducted, in which the roasting in the roasting step P14 was performed for two hours at a roasting temperature of 700°C under the air atmosphere. Also, the weight ratio of the roasted product to water in the first eluting step P21 was set such that the roasted product: water = 1 : 100. The first eluting step P21 was performed at room temperature.

The ratio A / P is, as mentioned above, the mixture ratio of the alkali metal salt to the cathode active material, which is the ratio of the alkali metal element content to the phosphorus element content, i.e., a value that is expressed as a mole ratio. In the experiment, a favorable lithium elution rate was achieved when the ratio A / P was greater than or equal to 1.5 and less than or equal to 3.0.

Further, in the present embodiment, in the recovery step P2, more specifically in the first eluting step P21, when the roasted product is immersed in water, magnesium hydroxide or calcium hydroxide is added thereto. In this manner, the roasted product containing lithium is immersed in water and the lithium is eluted into the water, and thereafter, iron, phosphorus, and fluorine that are contained in the roasted product can be precipitated as insoluble compounds. This makes it possible to readily separate iron, phosphorus, and fluorine as solids from the lithium-containing aqueous solution.

Also, in order to remove an excess portion of magnesium or calcium from the aqueous solution that has turned into an alkaline aqueous solution as a result of the addition of magnesium hydroxide or calcium hydroxide, the alkaline aqueous solution is subjected to carbon dioxide bubbling in the second eluting step P23 of the lithium separating step P20. In this manner, the pH of the aqueous solution is adjusted to weak alkaline; a carbonate is formed; and the excess portion of magnesium or calcium can be removed from the aqueous solution. Moreover, by performing the carbon dioxide bubbling, the aqueous solution can be fed with a carbonic acid source for lithium deposition.

Further, in the third separating step P26 of the lithium separating step P20, the slurry containing lithium carbonate is washed with hot water. The hot water is, for example, water that has been heated to 80°C or higher.

At the time of concentrating the aqueous solution in the concentrating step P25, not only does deposition of lithium carbonate to be recovered occur, but there is also a risk of deposition of the alkali metal salt that has been mixed. Specifically, as the alkali metal salt that has been mixed, at least one of sodium carbonate, potassium carbonate, rubidium carbonate, or cesium carbonate may be deposited. In the concentrating step P25, as described above, the aqueous solution is heated to about 80°C. It is known that the alkali metal salt that has been mixed has higher solubility to water at 80°C than the solubility of lithium carbonate to water at 80°C, i.e., more water-soluble than lithium carbonate. Accordingly, in the concentrating step P25, an aqueous solution containing lithium carbonate and also containing the alkali metal salt that has been mixed, the aqueous solution being obtained after the treatment in the second separating step P24, is heated to about 80°C and concentrated. Here, it is in general considered that the lithium carbonate is deposited first, and is separable from the more water-soluble alkali metal salt that has been mixed.

However, when the inventors conducted an actual experiment in which a LFP reagent was used, it was found from the experiment that at the time of concentrating the aqueous solution, not only does deposition of the lithium carbonate occur, but there is also a risk of deposition of the alkali metal salt that has been mixed. If the alkali metal salt that has been mixed is deposited in the concentrating step P25, it is difficult to make the purity of lithium that is recovered in the lithium separating step P20, more specifically in the third separating step P26, high purity, for example, 99.5% or higher, i.e., the same as the purity of lithium in a battery. It has also been found that if the concentration factor is lowered to increase the purity of the lithium carbonate, then the deposition of the lithium carbonate is reduced, and thereby the recovery rate of the lithium carbonate is lowered.

In view of the above-described problems, the inventors conducted diligent studies. As a result of the studies, they have found that by washing the slurry containing lithium carbonate by using hot water as described above, the lithium carbonate and the alkali metal salt that has been mixed can be separated from each other. Specifically, lithium carbonate has a property that the higher the temperature of the aqueous solution, the less soluble the lithium carbonate is in the aqueous solution, and by utilizing this property of lithium carbonate, the slurry is subjected to solid-liquid separation while washing the slurry with hot water. In this manner, the lithium carbonate can be deposited while dissolving the alkali metal salt that has been mixed. This consequently makes it possible to recover the lithium carbonate with high purity.

Instead of introducing hot water into the third separator 26 to wash the concentrated slurry during the solid-liquid separation, lithium carbonate-containing dehydrated cake that is obtained from the solid-liquid separation may be washed with hot water. That is, the dehydrated cake that is obtained after the solid-liquid separation by the third separator 26 may be washed with hot water. Further, the amount of hot water to be added may be set to a predetermined amount in accordance with certain conditions, for example, in accordance with whether the washing is performed during the solid-liquid separation or after the solid-liquid separation.

From the foregoing description, numerous modifications and other embodiments of the present disclosure are obvious to those skilled in the art. Accordingly, the description is to be construed as illustrative only, and is provided for the purpose of teaching those skilled in the art the best mode of carrying out the present disclosure. The structural and/or functional details may be substantially modified without departing from the scope of the present disclosure.

For example, the above embodiment describes, as one example, the processing system in which one or more devices or apparatuses correspond to each step. Alternatively, the processing system may be configured such that multiple steps are realized by one or more devices or apparatuses.

The above embodiment describes, as one example, the mode in which the non-lithium alkali metal carbonate that includes at least one of sodium carbonate, potassium carbonate, rubidium carbonate, or cesium carbonate is mixed into the cathode active material of the waste LIB. Alternatively, a non-lithium alkali metal hydroxide may be mixed into the cathode active material of the waste LIB.

### Industrial Applicability

The present disclosure makes it possible to recover lithium from a waste lithium-ion battery whose cathode active material contains phosphorus by eluting the lithium into water without complex process steps, and the present disclosure is useful to increase the recovery rate of the lithium.

### Reference Signs List

- 1: thermal decomposer
- 2: recovery system
- 11: pretreatment equipment
- 12: crusher-classifier
- 13: mixer
- 14: roaster
- 20: lithium separator
- 21: first elution equipment
- 22: first separator
- 23: second elution equipment
- 24: second separator

## Claims

1. A method of processing a waste lithium-ion battery whose cathode active material contains phosphorus to recover lithium from the waste lithium-ion battery, the method comprising:
a thermal decomposition step of roasting the waste lithium-ion battery to thermally decompose the waste lithium-ion battery to produce a roasted product that contains the cathode active material; and
a recovery step of immersing the produced roasted product in water to elute the lithium from the roasted product into the water, and then recovering the lithium, wherein
the thermal decomposition step includes:
a roasting step of roasting the waste lithium-ion battery at a predetermined first temperature; and
a mixing step of, before the roasting step, mixing a non-lithium alkali metal salt into the cathode active material of the waste lithium-ion battery.

2. The method of processing a waste lithium-ion battery according to claim 1, wherein
the mixing step includes mixing at least one of sodium carbonate, potassium carbonate, rubidium carbonate, or cesium carbonate into the cathode active material.

3. The method of processing a waste lithium-ion battery according to claim 1 or 2, wherein
a ratio of an alkali metal element content in the alkali metal salt that is mixed into the cathode active material to a phosphorus element content in the cathode active material is greater than or equal to 1.5 and less than or equal to 3.0.

4. The method of processing a waste lithium-ion battery according to any one of claims 1 to 3, wherein
the recovery step includes, when immersing the roasted product in water, adding magnesium hydroxide or calcium hydroxide thereto.

5. The method of processing a waste lithium-ion battery according to any one of claims 1 to 3, wherein
the recovery step includes:
a first eluting step of immersing the roasted product in water;
a first separating step of subjecting an aqueous solution that has been treated in the first eluting step to solid-liquid separation; and
a lithium separating step of concentrating a lithium salt aqueous solution obtained from the aqueous solution that has been separated in the first separating step into slurry, and subjecting the slurry to solid-liquid separation, and
the lithium separating step includes:
a second eluting step of subjecting the aqueous solution to carbon dioxide bubbling; and
a second separating step of subjecting the aqueous solution that has been treated in the second eluting step to solid-liquid separation.

6. The method of processing a waste lithium-ion battery according to any one of claims 1 to 5, wherein
the recovery step includes:
a first eluting step of immersing the roasted product in water;
a first separating step of subjecting an aqueous solution that has been treated in the first eluting step to solid-liquid separation; and
a lithium separating step of concentrating a lithium salt aqueous solution obtained from the aqueous solution that has been separated in the first separating step into slurry, and subjecting the slurry to solid-liquid separation, and
the lithium separating step includes washing, with hot water, the slurry or dehydrated cake that is obtained from subjecting the slurry to the solid-liquid separation.

7. The method of processing a waste lithium-ion battery according to any one of claims 1 to 6, wherein
the thermal decomposition step includes:
a pretreatment step of roasting the waste lithium-ion battery at a second temperature lower than the first temperature to decompose and remove an electrolyte solution from the waste lithium-ion battery; and
a crushing-classifying step of crushing the waste lithium-ion battery that has been treated in the pretreatment step, separating the cathode active material from a cathode current collector of the crushed waste lithium-ion battery, and sorting out the cathode active material, and
the mixing step is performed after the crushing-classifying step.

8. A system for processing a waste lithium-ion battery whose cathode active material contains phosphorus to recover lithium from the waste lithium-ion battery,
the system comprising:
a thermal decomposer that roasts the waste lithium-ion battery to thermally decompose the waste lithium-ion battery to produce a roasted product that contains the cathode active material; and
a recovery system that immerses the produced roasted product in water to elute the lithium from the roasted product into the water, and then recovers the lithium, wherein
the thermal decomposer includes:
a roaster that roasts the waste lithium-ion battery at a predetermined first temperature; and
a mixer that, before roasting the waste lithium-ion battery by the roaster, mixes a non-lithium alkali metal salt into the cathode active material of the waste lithium-ion battery.

9. The system for processing a waste lithium-ion battery according to claim 8, wherein
the mixer mixes at least one of sodium carbonate, potassium carbonate, rubidium carbonate, or cesium carbonate into the cathode active material.

10. The system for processing a waste lithium-ion battery according to claim 8 or 9, wherein
a ratio of an alkali metal element content in the alkali metal salt that is mixed into the cathode active material to a phosphorus element content in the cathode active material is greater than or equal to 1.5 and less than or equal to 3.0.

11. The system for processing a waste lithium-ion battery according to any one of claims 8 to 10, wherein
the recovery system, when immersing the roasted product in water, adding magnesium hydroxide or calcium hydroxide thereto.

12. The system for processing a waste lithium-ion battery according to any one of claims 8 to 11, wherein
the recovery system includes:
first elution equipment that immerses the roasted product in water;
a first separator that subjects an aqueous solution that has been treated by the first elution equipment to solid-liquid separation; and
a lithium separator that concentrates a lithium salt aqueous solution obtained from the aqueous solution that has been separated by the first separator into slurry, and subjects the slurry to solid-liquid separation, and
the lithium separator includes:
second elution equipment that subjects the aqueous solution to carbon dioxide bubbling; and
a second separator that subjects the aqueous solution that has been treated by the second elution equipment to solid-liquid separation.

13. The system for processing a waste lithium-ion battery according to any one of claims 8 to 11, wherein
the recovery system includes:
first elution equipment that immerses the roasted product in water;
a first separator that subjects an aqueous solution that has been treated by the first elution equipment to solid-liquid separation; and
a lithium separator that concentrates a lithium salt aqueous solution obtained from the aqueous solution that has been separated by the first separator into slurry, and subjecting the slurry to solid-liquid separation, and
the lithium separator washes, with hot water, the slurry or dehydrated cake that is obtained from subjecting the slurry to the solid-liquid separation.

14. The system for processing a waste lithium-ion battery according to any one of claims 8 to 13, wherein
the thermal decomposer includes:
pretreatment equipment that roasts the waste lithium-ion battery at a second temperature lower than the first temperature to decompose and remove an electrolyte solution from the waste lithium-ion battery; and
a crusher-classifier that crushes the waste lithium-ion battery that has been treated by the pretreatment equipment, separates the cathode active material from a cathode current collector of the crushed waste lithium-ion battery, and sorts out the cathode active material, and
the mixer mixes the alkali metal salt into the cathode active material that has been sorted out by the crusher-classifier.
